Europäisches Patentamt

European Patent Office

Office européen des brevets

(19)

(11) Veröffentlichungsnummer: **0 193 833**
**B1**

(12) **EUROPÄISCHE PATENTSCHRIFT**

(45) Veröffentlichungstag der Patentschrift: **23.11.89**

(51) Int. Cl.⁴: **A 01 C 7/04**

(21) Anmeldenummer: **86102385.1**

(22) Anmeldetag: **24.02.86**

(54) **Sävorrichtung.**

(30) Priorität: **25.02.85 US 704859**

(43) Veröffentlichungstag der Anmeldung:
**10.09.86 Patentblatt 86/37**

(45) Bekanntmachung des Hinweises auf die
Patenterteilung:
**23.11.89 Patentblatt 89/47**

(84) Benannte Vertragsstaaten:
**DE FR GB**

(56) Entgegenhaltungen:
**EP-A-0 157 166**
**US-A-3 999 690**
**US-A-4 074 830**

(73) Patentinhaber: **DEERE & COMPANY**
**1 John Deere Road**
**Moline Illinois 61265 (US)**

(72) Erfinder: **Martin, James Carlson**
**1809 East 31st Street**
**Davenport Iowa 52807 (US)**
Erfinder: **Olson, Jay Harold**
**1716-29th Street**
**Rock Island Illinois 61201 (US)**

(74) Vertreter: **Feldmann, Bernhard et al**
**DEERE & COMPANY European Office,**
**Patent Department**
**Steubenstrasse 36-42 Postfach 503**
**D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf eine Sävorrichtung, insbesondere Einzelkornsävorrichtung, mit einer in einem Gehäuse drehbar gelagerten Säscheibe, die auf einem im Gehäuse drehbar gelagerten Welle lösbar angeordnet ist, die einenends aus dem Gehäuse herausragt.

Es ist bereits eine Einzelkornsävorrichtung bekannt (US—A—4 074 830), die mit einem auf einem in einem Gehäuse angeordneten Welle befestigten Särad ausgerüstet ist, das mittels Arretierungselementen festsetzbar ist. Befinden sich beispielsweise im Sammelbehälter zur Aufnahme des Saatgutes Verunreinigungen, so bestehen keine Möglichkeiten, diese getrennt ohne weiteres nach außen hin abzugeben, da das Särad fest mit der Welle verbunden und so angeordnet ist, daß die einzelnen Saatkörner über das Särad in eine Austragschute abgestoßen werden können.

In der EP—A2—0 141 637, die nur hinsichtlich der Neuheit in Betracht zu ziehen ist, ist bereits eine Möglichkeit offenbart, duß durch einen Spalt zwischen dem Särad und dem Gehäuse Kornbruchstücke bzw. Verunreinigungen nach außen fallen können. Die Breite des Spaltes ist durch Austausch der Säscheibe und von Distanzstücken veränderbar.

Die mit der Erfindung zu lösende Aufgabe wird darin gesehen, mit einfachen Mitteln zwischen Särad und Gehäuse einen in seiner Breite veränderbaren Spalt zum Austritt von Kornbruchstükken oder Verunreinigungen vorzusehen. Diese Aufgabe ist gemäß der Erfindung dadurch gelöst worden, daß zumindest auf einem Teil der Welle eine Nabe axial verstellbar angeordnet ist, die zum Anschluß der Säscheibe dient und über Arretierungselemente an jeder beliebigen Stelle auf dem Teil der Welle, auf dem die Nabe axial verstellbar ist, lösbar befestigbar ist. Auf diese Weise wird eine Veränderung der Spaltbreite zwischen Särad und Gehäuse durch einfaches Verstellen der Nabe auf der Welle erreicht.

Zweckmäßig können die Arretierungselemente zum lösbaren Anschluß der Nabe auf der Welle einen Bolzen aufweisen, der mit der Welle und der Nabe verbindbar ist. Zum einfachen Anordnen des Särades an verschiedenen Stellen kann nach der Erfindung ein Teil der Welle mit Gewinde versehen sein und die Nabe eine mit Gewinde versehene, auf das Gewinde der Welle aufschraubbare Bohrung aufweisen, wobei die Arretierungselemente zum lösbaren Anschluß der Nabe auf der Welle so ausgebildet sind, daß sie ein Drehen der mit Gewinde versehenen Bohrung auf dem Gewinde der Welle verhindern. Zum Arretieren des Särades an verschiedenen Stellen wird nach der Erfindung vorgeschlagen, daß die Welle mit einer Bohrung und die Nabe mit zahlreichen gegenüberliegenden Öffnungen versehen ist, in die das Arretierungselement bzw. der Bolzen einsetzbar sind.

Einem Herausfallen des Bolzens wird dadurch entgegengewirkt, daß der Bolzen ein äußeres in eine der zahlreichen Öffnungen der Nabe einrastbares, gebogenes Ende aufweist, wobei die Öffnung zur Aufnahme des Endes neben den diametral gegenüberliegenden Öffnungen zur Aufnahme des gerade verlaufenden Teils des Bolzens vorgesehen ist.

Vorteilhaft kann die Peripherie bzw. der Außenumfang der Säscheibe einen Abstand zur Peripherie des Gehäuses aufweisen, wobei der Abstand durch die Lage der Nabe auf der Welle bestimmt wird, auf der die Nabe lösbar angeordnet ist, wobei die Nabe auf einer Drehachse verläuft, die koaxial zur durch die Gewinde aufweisende Bohrung verlaufenden Achse angeordnet ist, und wobei die Bohrung derart größer ist als das Gewinde der Welle, daß durch die Bewegung der Nabe auf der Welle geringfügige Winkelabweichungen zwischen den beiden Achsen ausgeglichen bzw. eingestellt werden können.

Ein einfaches Arretieren wird dadurch erreicht, daß die Bohrung in der Welle rechtwinklig zur Drehachse verläuft und die zahlreichen koaxial um die das Gewinde aufweisende Bohrung angeordneten Öffnungen als Längsschlitze ausgebildet sind, wobei der Bolzen des lösbaren Arretierungselementes sich durch die Bohrung und zwei sich gegenüberliegende Längsschlitze der Nabe erstreckt. Hierbei kann das Arretierungselement aus dem annähernd gerade bzw. gerade verlaufenden, durch die Bohrung der Welle und durch gegenüberliegende Längsschlitze sich erstreckenden Bolzen bestehen, an den sich ein gebogener bzw. hakenförmiger Teil anschließt, der in einen der Längsschlitze der Nabe einrastbar ist, wobei dieser Teil zwischen den gegenüberliegenden, den Bolzen aufnehmenden Längsschlitzen liegt. Zweckmäßig weist die Nabe vier einen gleichen Abstand untereinander aufweisende Längsschlitze auf.

Eine leichte Reinigung des Spaltes zwischen Särad und Gehäuse läßt sich automatisch durchführen, wenn die Säscheibe zahlreiche Saatzellen und daran anschließende, sich radial erstreckende Aussparungen aufweist, die durch keilförmige, zur Peripherie hin abnehmende, sich radial erstreckende Stege bzw. Rippen unterteilt sind.

Im einzelnen kann die Säscheibe zwischen der in verschiedenen Stellungen festsetzbaren Nabe und einem auf der Welle festklemm- bzw. aufpressbaren Griffteil festsetzbar sein, wobei der Griffteil mittels einer auf der Welle aufpressbaren Buchse und einer Feder gegen die Nabe drückbar und festsetzbar ist.

Die Montage der erfindungsgemäßen Vorrichtung sieht folgende Hauptarbeitsschritte vor:

1. Einbau der Welle in das Gehäuse,
2. Vorläufiges Einstellen der Nabe auf der Welle,
3. Befestigung der Säscheibe an der Nabe,
4. Einstellen der Nabe · auf der Welle in die gewünschte Endstellung,
5. Festsetzen der Nabe auf der Welle.

Im einzelnen gliedern sich diese Hauptarbeitsschritte in folgende Tätigkeiten auf:

1. der Einbau der Welle in das Gehäuse erfolgt durch Einpressen der Welle in einen Lagerring eines Lagers im Gehäuse,

2. zum vorläufigen Einstellen der Nabe auf der Welle wird die Nabe auf die Welle aufgeschraubt,

3. nach dem Anbau der Sässcheibe an die Nabe wird die Nabe auf der Welle durch Weiterdrehen so lange axial verstellt, bis die Säscheibe einen gewünschten Abstand zu dem Gehäuse aufweist,

4. zum Sichern der Nabe auf der Welle wird die Säscheibe wieder abgebaut, das Arretierungselement in Nabe und Welle eingesetzt und die Säscheibe wieder an die Nabe angebaut,

wobei nach dem vorläufigen Einstellen der Nabe auf der Welle ein Griffteil auf einen Zapfen an der Welle und nachfolgend eine Feder auf den Zapfen aufgeschoben werden, wonach auf den Zapfen eine Busche aufgesetzt wird.

Im folgenden wird die Erfindung anhand von lediglich einen Ausführungsweg darstellenden Zeichnungen näher erläutert. Es zeigt:

Fig. 1 eine perspektivische Darstellung eines Sammelbehälters mit einem Zellrad sowie dem zugehörigen Zellradgehäuse mit aufgeklapptem Gehäusedeckel,

Fig. 2 eine Rückansicht des Zellrades mit dem zugehörigen Zellradgehäuse in Offenstellung,

Fig. 3 eine Schnittdarstellung des Zellradgehäuses mit dem zugehörigen Zellrad gemäß Fig. 1,

Fig. 4 eine perspektivische Darstellung des Zellradgehäuses,

Fig. 5 einen Teilschnitt durch das Zellrad mit dem Saatgut und dem Spalt zwischen dem unteren äußeren Teil des Zellrades und der gegenüberliegenden Wand des Zellradgehäuses,

Fig. 6 eine perspektivische Teilansicht der unteren Kante des Zellrades, in dem zahlreiche Vertiefungen zur Aufnahme des Saatgutes vorgesehen sind,

Fig. 7 ein Blockdiagramm der einzelnen Arbeitsschritte zum Einbau des Zellrades in das Zellradgehäuse,

Fig. 8 ein weiteres Blockdiagramm der einzelnen detaillierten Arbeitsschritte zum Einbau und zur Positionierung des Zellrades im Zellradgehäuse gemäß den Figuren 1 bis 6,

Fig. 9 eine auseinandergezogene Darstellung der Befestigungseinrichtung des Zellrades,

Fig. 10 eine Vorderansicht der Nabe gemäß Fig. 9,

Fig. 11 eine Seitenansicht der Nabe gemäß Fig. 9,

Fig. 12 eine Frontansicht des Bolzens gemäß Fig. 9 im größeren Maßstab.

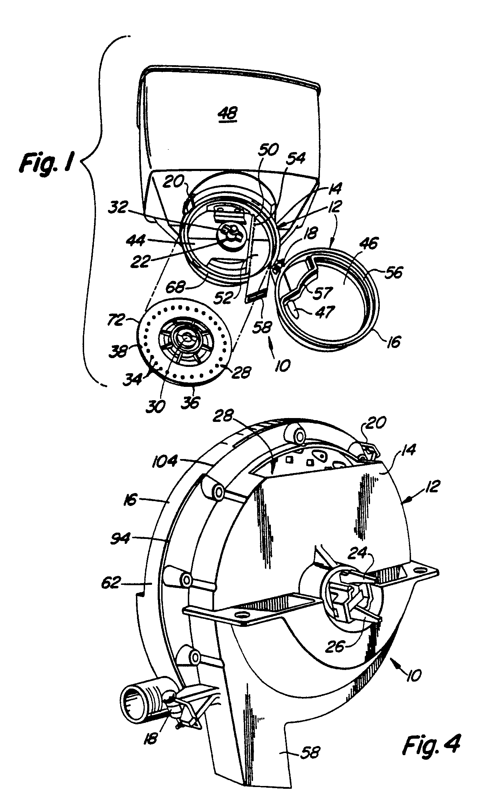

In der Zeichnung ist in den Figuren 1 bis 6 eine Sävorrichtung mit 10 bezeichnet, die nach dem Vakuumprinzip arbeitt und zumindest teilweise der in der EP Anmeldung 0 140 701 beschriebenen Sävorrichtung entspricht.

Die nach dem Vakuumprinzip arbeitende Sävorrichtung 10 weist ein in etwa zylinderförmig ausgebildetes Gehäuse 12 auf mit einer ersten Gehäusehälfte 14, die an eine zweite Gehäusehälfte 16 angepaßt ist. Die zweite Gehäusehälfte 16 ist mittels eines Gelenkes 18 an die erste Gehäusehälfte 14 gelenkig angeschlossen, so daß durch Heranschwenken der zweiten Gehäusehälfte 16 an die erste Gehäusehälfte 14 das Gehäuse 12 geschlossen werden kann. Hierzu weist die erste Gehäusehälfe 14 eine Verriegelungslasche 20 auf, die in etwa diametral gegenüber dem Gelenk 18 liegt und die nach Heranschwenken der zweiten Gehäusehälfte 16 dieses in seiner Schließstellung hält.

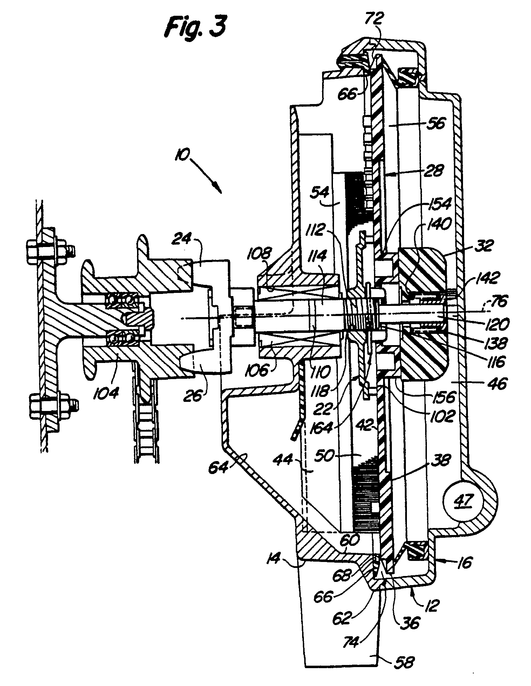

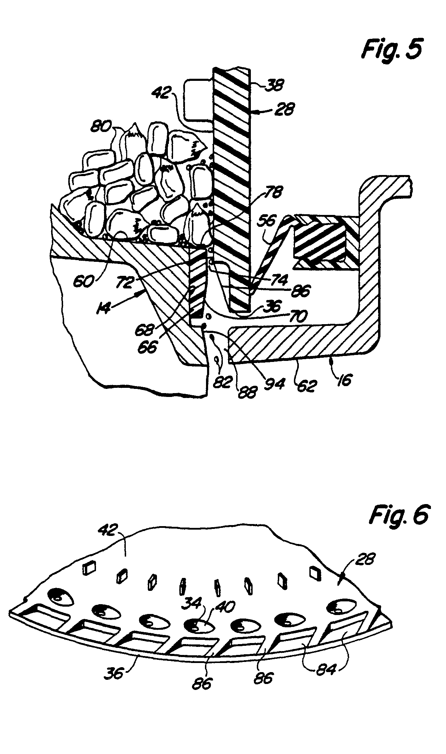

Eine Nabe 22 ist in der ersten Gehäusehälfte 14 des Gehäuses 12 mittig drehbar gelagert. Wie aus den Figuren 3 und 4 hervorgeht, sind zwei gegenüberliegende Zapfen 24 und 26 an der Außenseite der ersten Gehäusehälte 14 vorgesehen und ragen somit an der Rückseite des Gehäuses 12 heraus. Die Zapfen 24 und 26 sind (Fig. 3) drehbar mit der Nabe 22 verbindbar.

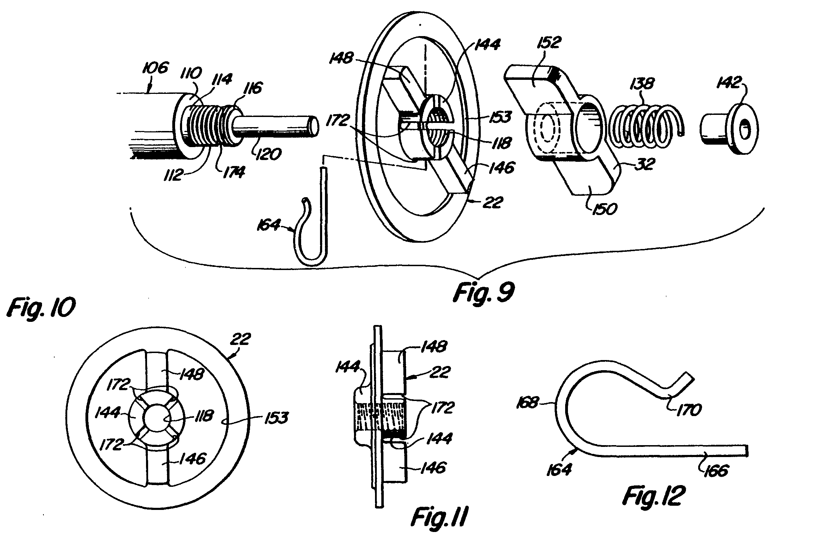

Die Sävorrichtung 10 weist eine Säscheibe 28 auf, die mit einer zentrisch angeordneten länglichen Öffnung 30 versehen ist. Die Säscheibe 28 ist auf der drehbar angeordneten Nabe 22 befestigt, wobei ein Griffteil 32, der auf der Nabe 22 befestigt ist, in die längliche Öffnung 30 eingesetzt wird, um die Säscheibe 28 auf der Nabe 22 zu justieren bzw. zu befestigen. Der Griffteil 32 wird dann in eine Richtung gedreht, so daß die Säscheibe 28 auf der Nabe 22 befestigt ist. Die Anordnung der Montage der Säscheibe 28 auf der Nabe 22 ist ferner in Fig. 9 veranschaulicht (eine ähnliche Darstellung ist auch in der EP Anmeldung 0 140 699 veranschaulicht und beschrieben).

Die Säscheibe 28 weist zahlreiche Öffnungen 34 auf, die auf einem Kreis innerhalb des kreisförmig verlaufenden Außenumfangs bzw. einer Kante 36 des Säscheibe 28 und koaxial zur Mittelachse der Säscheibe angeordnet sind. Eine jede Öffnung 34 verbindet eine erste Seite 38 der Säscheibe 28, mit einer in der Oberfläche einer zweiten Seite 42 der Säscheibe 28 vorgesehenen Saatzelle 40 (siehe Fig. 6).

Nachdem die Säscheibe 28 auf der Nabe 22 befestigt ist und die zweite Gehäusehälfte 16 an die erste Gehäusehälfte 14 herangeschwenkt ist, teilt die Säscheibe 28 den inneren Hohlraum des zylindrischen Gehäuses 12 einerseits in eine Saatgutkammer 44 zwischen der Säscheibe 28 und der ersten Gehäusehälfte 14 und in eine Vakuumkammer 46 zwischen der Säscheibe 28 und der zweiten Gehäusehälfte 16 auf. Die Vakuumkammer 46 weist eine Vakuumschlußöffnung 47 in der zweiten Gehäusehälfte 16 auf, so daß hierdurch in der Vakuumkammer 46 ein entsprechendes Vakuum geschaffen werden kann. Der durch das Vakuum gebildete niedere Druck wirkt sich über die Öffnungen 34 auch auf die Saatzellen 40 in der zweiten Seite 42 der Säscheibe 28 aus.

Wie aus Fig. 1 hervorgeht, ist die erste Gehäusehälfte 14 des Gehäuses 12 am Boden eines Saatgutbehälters 48 angeschlossen, um Saatgut aufzunehmen, das über die Sävorrichtung 10 entsprechend dosiert ausgetragen wird. Das Saatgut aus dem Saatgutbehälter 48 fließt in die Saatgutkammer 44 der ersten Gehäusehälfte 14 und legt sich dabei gegen die zweite Seite 42 der Säscheibe 28 an. Wird die Nabe 22 angetrieben, so wird ebenfalls die Säscheibe 28 in Drehung versetzt, und die einzelnen Saatzellen 40 bewegen sich durch das Saatgut und nehmen dabei in den Saatzellen 40 einzelne Saatkörner auf, die dann aus der Saatgutkammer 44 herausbewegt werden. Durch den herabgesetzten Druck innerhalb der Saatgutkammer 44 werden die einzelnen Saatkörner in den Saatzellen 40 gehalten, bis die Saatzellen 40 sich an einer Abstreifbürste 50 vorbei bewegen. Die Abstreifbürste bzw. Aufteilbürste 50 erstreckt sich quer durch den inneren Teil der ersten Gehäusehälfte 14 und bildet einen Saatgutaustragbereich 52 (Fig. 1), der von der Saatgutkammer 44 getrennt ist, so daß die Masse des Saatgutes von der Abstreifbürste 50 in der Saatgutkammer 44 zurückgehalten wird. Hierzu ist eine Teilungswand 54 vorgesehen, auf der die Abstreifbürster 50 angeordnet ist und die mit dieser zusammenwirkt. Wenn die Saatzellen 40 in den Saatgutaustragbereich 52 eintreten, nimmt der Druckabfall ab, da nunmehr die Vakuumkammer 46 von dem Saatgutaustragbereich abgeschnitten ist. Dies geschieht auch infolge einer Vakuumdichtung 56, die sich auf der Innenseite der zweite Gehäusehälfte 16 befindet und die im Kontakt mit der ersten Seite 38 der Säscheibe 28 steht. Ein Teil 57 der Vakuumdichtung 56 erstreckt sich von dem Außenumfang der ersten Gehäusehälfte 16 nach innen, um den Saatgutaustragbereich 52 vom Vakuumbereich abzutrennen. Wenn das Vakuum von der Saatzelle 40 abgeschnitten ist, fällt das Saatgut aus der Saatzelle 40 unter dem Einfluß der Schwerkraft nach unten. Das Saatgut bzw. Saatkorn fällt in eine Austragschute 58, die sich im Boden der ersten Gehäusehälfte 14 befindet.

Wie aus Fig. 3 hervorgeht, bildet das Saatgut aus dem Saatgutbehälter 48 gemäß Fig. 1 eine Saatgutmasse im unteren Teil der Saatgutkammer 44. Das Saatgut der Saatgutmasse ruht auf der inneren Oberfläche 60 eines kreisförmigen äußeren Ringes 62 des Gehäuses 12. Das Saatgut liegt ebenfalls gegen die zweite Seite 42 der Säscheibe 28 sowie an der gegenüberliegenden inneren, geneigt verlaufenden Wand 64 der ersten Gehäusehälfte 14 an. Im Arbeitseinsatz der Sävorrichtung 10 sammeln sich Saatgutstücke bzw. beschädigtes Saatgut, Schmut und andere Verunreinigungen in der Saatgutkammer 44 an. Die meisten dieser Verunreinigungen werden durch die Öffnungen 34 in der Säscheibe 28 herausbewegt, da das durch die Vakuumkammer 46 erzeugte Vakuum an den Öffnungen 34 einen Unterdruck erzeugt. Ein Teil der Verunreinigungen bleibt auf der Oberfläche 60 der zweiten Seite 42 der Säscheibe 28 haften.

Die Verunreinigungec, die in der Saatgutkammer 44 bleiben, werden durch eine Vorrichtung beseitigt, die im Detail in der EP Anmeldung 0 141 637 beschrieben ist. Eine derartige Vorrichtung weist einen Reinigungsteil mit Dichtungselement 66 auf, der auf der kreisförmig verlaufenden Oberfläche 68 der ersten Gehäusehälfte 14 des Gehäuses 12 angeordnet ist. Der Reinigungsteil mit Dichtungselement 66 wird lediglich durch die Austragschute 58 im Boden des Saatgutaustragbereiches 52 unterbrochen und weist eine äußere Oberfläche 70 auf, die sich entlang Reinigungsteils mit Dichtungselement 66 im Bereich eines äußeren Peripherieteils 72 des Säscheibe 28 im Bereich des Außenumfangs 36 erstreckt, so daß hier ein schmaler Spalt 74 gebildet wird. Der Querschnitt der Reinigungsteils mit Dichtungselement 66 ist derart keilförmig, daß der Spalt 74 mit Bezug auf die Drehachse 76 der Säscheibe 28 nach außen hin zunimmt.

Die Große des keilförmigen Spaltes 74 im Bereich einer inneren Kante 78 des Reinigungsteil mit Dichtungselement 66 soll kleiner sein als die kleinste Größe eines Saatkornes, das in die Sävorrichtung 10 eingegeben wird. Jedoch soll der Spalt 74 groß genug sein, um den größten Anteil von kleinen Teilen, Saatgutelementen oder Schmutzteilen nach außen hin abzugeben. Wie aus Fig. 5 hervorgeht, verlaufen die gegenüberliegenden, den Spalt 74 bildenden Flächen im Bereich der Peripherieteils 72 in etwa parallel zueinander. Erst dann erweitert sich der Spalt 74 in etwa keilförmig. Aus Vorstehendem geht hervor, daß der Spalt 74 es ermöglicht, lediglich die Verunreinigungen abzugeben und das Saatgut in der Saatgutkammer 44 zurückzuhalten. Aus Fig. 5 geht ferner hervor, daß das mit 80 bezeichnete Saatgut aus der Saatgutkammer nicht heraus fallen kann und daß die mit 82 bezeichneten Verunreinigungen durch den Spalt 74 nach außen abgegeben werden.

Wie aus Fig. 6 hervorgeht, ist der Außenumfang 36 der Säscheibe 28 mit zahlreichen einen gleichmäßigen Abstand untereinander aufweisenden, sich radial erstreckenden Aussparungen 84 ausgestattet. Zwei nebeneinander liegende Aussparungen 84 bilden eine Rippe 86. Die Rippen 86 sind auf der einen Seite des Spaltes 74 vorgesehen und weisen zwischen der Seite 42 und dem Außenumfang 36 eine nach außen hin geneigt verlaufende Oberfläche auf. Die Kanten bzw. Rippen 86 können somit als Kratzelemente dienen und auf der gegenüberliegenden Oberfläche 70 sich ansammelnde Verunreinigungen abbauen. Ferner dienen die Aussparungen 84 dazu, Verunreinigungen leichter nach außen hin abzugeben.

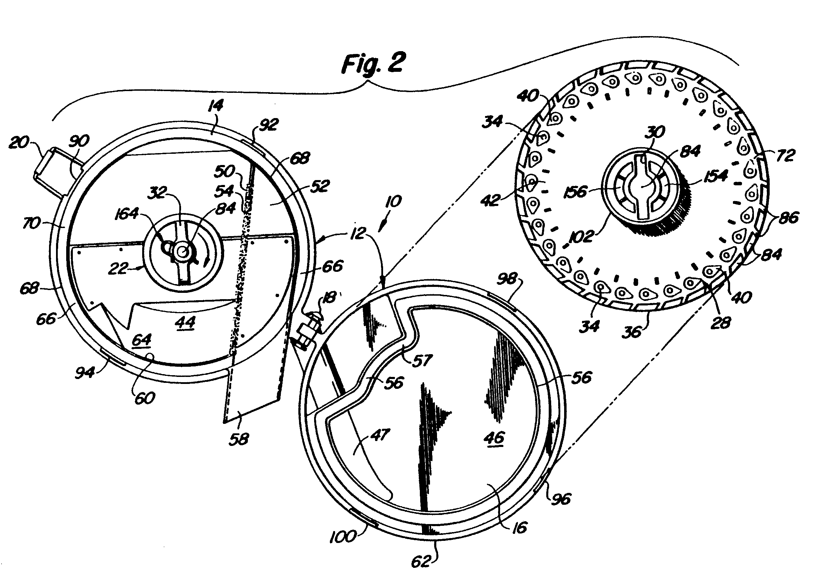

Das zylindrische Gehäuse 12 weist einen Schlitz 88 auf, der ringförmig entlang dem Ring 62 der zweiten Gehäusehälfte 16 verläuft. Der ringförmige Schlitz 88 wird durch die gegenüberliegenden Kanten der ersten und zweiten Gehäusehälfte 14 und 16 gebildet, die, wie aus den Figuren 1 und 2 bzw. aus der Fig. 5 zu entnehmen ist, mit geringfügigem Abstand zueinander angeordnet sind. Wie aus Fig. 2 hervorgeht, weist hierzu die erste Gehäusehälfte 14 einen Flansch 90 auf, der gegenüber dem Gelenk 18 vorgesehen ist und außerhalb des Reinigungsteils mit Dichtungselement 66 liegt. Zwei weitere Flansche 92 und 94 sind diametral gegenüber auf der ersten Gehäusehälfte zwischen dem Flansch 90 und dem Gelenk 18 vorgesehen. Auf der zweiten Gehäusehälfte 16 befindet sich ebenfalls gegenüber dem Gelenk 18 ein Flansch 96 sowie zwei diametral gegenüberliegende Flansche 98 und 100. Der radiale Abstand der Flansche 96, 98 und 100 von der Drehachse 76 der zweiten Gehäusehälfte 16 ist etwas größer als der radiale Abstand der Flansche 90, 92 und 94 von dem Mittelpunkt der ersten Gehäusehälfte 14. Wenn die zweite Gehäusehälfte 16 durch Heranschwenken an die ersten Gehäusehälfte 14 geschlossen wird, so erstreckt sich der Flansch 96 unmittelbar außerhalb des Flansches 90 und greift in diesen ein. Auf gleiche Weise werden auch die Flansche 98 und 100 gegen die Außenoberfläche der Flansche 92 und 94 zur Anlage gebracht. Die zahlreichen Flansche 90 bis 100 halten in Verbindung mit dem Gelenk 18 die beiden Gehäusehälften 14 und 16 derart zusammen, daß sie einen schmalen Abstand, und zwar den ringförmigen Schlitz 88, bilden.

Aus Vorstehendem geht hervor, daß die Öffnung bzw. der ringförmige Schlitz 88 sich im wesentlichen über den gesamten Außenumfang des Gehäuses 12 erstreckt, und zwar im Bereich der Reinigungsteil mit Dichtungselement 66 sowie dem Außenumfang 36 der Säscheibe 28. Der ringförmige Schlitz 88 erleichtert den Austrag der Verunreinigungen, die in dem Inneren des Gehäuses 12 sich ansammeln könne, da sie durch den ringförmigen Schlitz an jeder Stelle des Gehäuses austreten können.

Wie aus Fig. 2 hervorgeht, weist die zweite Seite 42 der Säscheibe 28 einen sich axial nach außen erstreckenden Distanzring 102 auf, der koaxial zur Drehachse 76 verläuft und gegen die Nabe 22 und die Oberfläche der Säscheibe 28 anliegt, so daß zwischen der Nabe 22 und der Oberfläche der Säscheibe ein Spalt bzw. ein Abstand gebildet wird. Ist die Nabe 22 in dem Gehäuse 12 fixiert, wird durch den Distanzring 102 die Größe des Spaltes 74 zwischen dem Reinigungsteil mit Dichtungselement 66 im Bereich der Oberfläche 68 des Gehäuses 12 und der Peripherieteil 72 der Säscheibe 28 bestimmt. Die Säscheibe 28 wird entsprechend einem Saatgut ausgewählt und der Distanzring 102 so ausgewählt, daß ein entsprechend großer Spalt 74 gebildet werden kann, so daß das entsprechende Saatgut nicht durch den Spalt gelangen kann, sondern nur die im Saatgut enthaltenen Verunreinigungen. Wird beispielsweise ein anderes Saatgut in den Sammelbehälter eingefüllt, so wird dann auch die Säscheibe 28 entsprechend gegen eine andere Säscheibe ausgewechselt. Die neue Säscheibe ist dann ebenfalls mit einem Distanzring 102 ausgestattet, die eine derartige Dicke aufweist, daß sie auf das zu verwendende Saatgut abgestimmt ist. Säscheiben 28, die für größere Saatkörner eingesetzt werden, weisen Distanzringe 102 auf, die relativ breit sind, so daß die zweite Seite 42 der Säscheibe 28 einen größeren Abstand zur Nabe 22 erhält und somit der Spalt 74 entsprechend größer wird. Werden beispielsweise kleinere Saatkörner im Saatgutbehälter 48 der Sävorrichtung 10 aufgenommen, so kann der Spalte 74 entsprechend verkleinert werden, um die Saatkörner in der Saatgutkammer 44 zurückzuhalten, so daß diese nicht durch den Spalt 74 austreten könne. Dies wird dadurch ermöglicht, daß die Säscheibe 28 mit einem entsprechenden schmaleren Distanzring 102 ausgestattet wird, so daß die zweite Seite 42 der Säscheibe 28 näher an die Nabe 22 herangebracht werden kann.

Wie bereits mit Bezug auf Fig. 3 ausgeführt worden ist, ist die auf der Nabe 22 angeordnete Säscheibe 28 mittels der beiden Zapfen 24 und 26 antreibbar. Hierzu greifen die Zapfen 24 und 26 in ein Abtriebsrad 104 (Fig. 3) ein. Die beiden Zapfen 24 und 26 sind mittels eines Trägers in einem Lager 106 aufgenommen, das in einer Bohrung 108 vorgesehen ist, die in der ersten Gehäusehälfte 14 des Gehäuses 12 angeordnet ist. Das Lager 106 weist einen Lagerring 110 auf, mit dem dit Nabe 22 über eine welle 112 gekuppelt werden kann, Hinzu ist die Welle 112 einenends mit einen Zapfen 114 versehen, der in das äußere Ende des Lagers 106 eingesetzt ist. Am anderen Ende der Welle 112 ist ein Gewinde 116 vorgesehen auf das die Nabe 22 über einer Innengewinde aufweisende Bohrung 118 aufschraubbar ist. An das Gewinde 116 schließt sich ein weiterer im Durchmesser kleinerer Zapfen 120 an, auf den der Griffteil 32 sowie eine Feder 138 mit einer Buchse 142 aufschiebbar bzw. aufpressbar sind. Die aus dem Zapfen 114 und dem Gewinde 116 gebildete Welle 112 dient im Zusammenhang mit der Bohrung 118 der Nabe 22 zur genauen Fixierung und Ausrichtung der Säscheibe 28 mit Bezug auf die erste Gehäusehälfte 14 des Gehäuses 12. Die präzise Positionierung der Säscheibe 28 hat zur Folge, daß der Spalt 74 zwischen der äußeren Peripherie der Oberfläche 68 des Gehäuses 12 und dem äußeren Peripherieteil 72 der Säscheibe 28 so eingestellt werden kann, daß sich ein gleichförmier Ringspalt bildet. Hierdurch wird, wie bereits erwähnt, der Austrag der Verunreinigungen 82 gewährleistet, wobei die Saatkörner 80 von dem relativ schmalen Spalt 74 zurückgehalten werden.

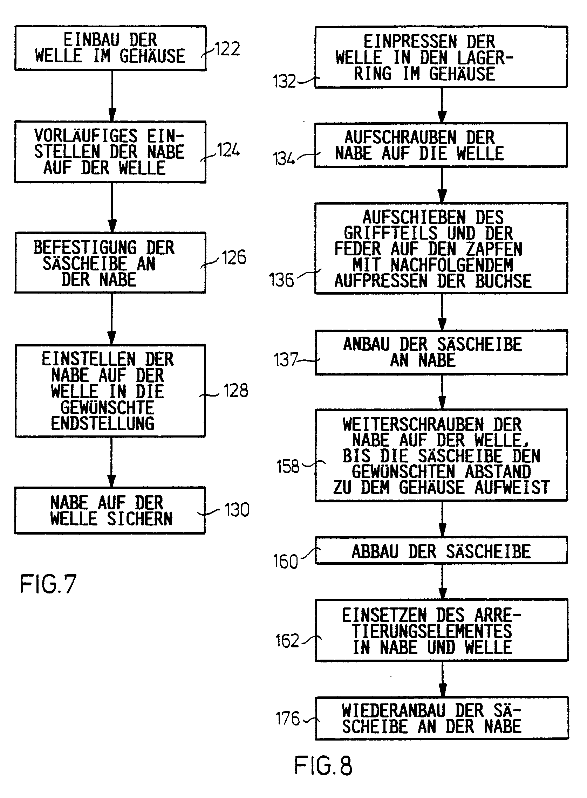

Fig. 7 beschreibt die einzelnen Arbeitsschritte des Verfahrens zur genauen Ausrichtung bzw. zum Einbau der Säscheibe 28 innerhalb des Gehäuses 12 der Sävorrichtung 10 gemäß der Erfindung.

Das in dem Blockschaltbild gemäß Fig. 7 beschriebene Arbeitsverfahren beginnt mit der Arbeitsstufe 122, die sich auf den Einbau der Welle 112 in das Gehäuse 12 bezieht. In der zweiten nachfolgenden Arbeitsstufe 124 wird die Nabe 22 zur Montage der Säscheibe 28 auf die Welle 112 aufgebracht. Die anfangliche Ausrichtung der Nabe 22 auf der Welle 112 wird dadurch herbeigeführt, daß die Säscheibe 28 von der Nabe 22 gelöst wird, um ein leichteres Ausrichten der Nabe zu ermöglichen. Nach dem Ausrichten der Nabe 22 auf der Welle 112 wird die Säscheibe in einer nachfolgenden dritten Arbeitsstufe 126 auf der Nabe 22 montiert. Nachdem die Säscheibe 28 auf der nabe 22 in der dritten Arbeitsstufe 126 montiert ist, werden die Nabe und die Säscheibe entlang der Welle bewegt und in die gewünschte Stellung gebracht. Dies entspricht dann der vierten Arbeitsstufe 128.

Das Verschieben der Nabe 22 und der Säscheibe 28 auf der Welle 112 gemäß der vierten Arbeitsstufe 128 bietet die Möglichkeit, die Säscheibe innerhalb des Gehäuses 12 genau auszurichten. Somit kann auch der Spalt 74 zwischen der Peripherieteil 72 der Säscheibe 28 und Oberfläche 68 des Gehäuses 12 entsprechend der Größe des Saatkornes eingestellt werden. Die fünfte Arbeitsstufe 130 gemäß Fig. 7 besteht in der Befestigung der Nabe 22 auf der Welle in der gewünschten Position. Die Feststellung der Nabe 22 auf der Welle 112 ist eigentlich für immer gedacht, jedoch ist es auch möglich, die nabe sowie die Säscheibe an einer anderen Stelle auf der Welle zu befestigen, wenn eine Veränderung der Größe des Spaltes 74 notwendig ist.

Fig. 8 zeigt ein weiteres Blockschaltbild der einzelnen Arbeitsmethoden der Vakuumsäeinrichtung gemäß den Figuren 1 bis 6.

Nach der Arbeitsmethode bzw. dem Arbeitsverfahren gemäß Fig. 8 wird die Montage der Welle 112 innerhalb des Gehäuses gemäß dem ersten Arbeitsschritt 122 nach Fig. 7 durch einen nachfolgenden Arbeitsschritt 132 durchgeführt, indem die Welle 112 in den äußeren Lagerring 110 des Lagers 106 innerhalb der ersten Gehäusehälfte 14 des Gehäuses 12 gepreßt wird. Durch diesen Preßsitz wird die Welle 112 innerhalb des Gehäuses 12 fixiert. Wie aus Fig. 3 hervorgeht, ist das erste Ende bzw. der Zapfen 114 der Welle 112 in den äußeren Lagerring 110 eingepreßt. Das Einpressen der Welle 112 in den äußeren Lagerring 110 kann manuell durchgeführt werden. Vorzugsweise wird das Einpressen jedoch mittels einer Maschine durchgeführt, so daß ein gleichmäßiges Einführen der Welle 112 ohne Beschädigung sichergestellt ist. Das Lager 106 des äußeren Lagerringes 110 und die Welle 112 sind in den Figuren 3 und 9 veranschaulicht.

In der nächsten Arbeitsstufe 134 wird die Nabe 22 auf das Gewinde 116 der Welle 112 aufgeschraubt. Wie bereits erwähnt, ist ein Teil der Welle 112 mit Gewinde 116 versehen. Die Nabe 22 ist mit einer ein Gewinde aufweisenden Bohrung 118 ausgestattet. Die Arbeitsstufe 134 besteht darin, daß die Nabe 22 auf das Gewinde 116 der Welle 112 aufgeschraubt und hierzu entsprechend gedreht wird.

Die nächste Arbeitsstufe 136 gemäß Fig. 8 besteht in der Vorbereitung zur Montage der Säscheibe 28 auf der Nabe 22. Wie aus den Figuren 3 und 9 hervorgeht, wird der Griffteil 32 drehabr und gegen die Wirkung der Feder 138 auf den Zapfen 120 aufgebracht, der an das Gewinde 116 der Welle 112 angeschlossen ist. Gemäß Fig. 3 wird die Feder 138 auf den Zapfen 120 aufgeschoben, die sich zwischen einem Flansch 140 des Griffteiles 32 und der Buchse 142 erstreckt. Die Buchse 142 wird auf das äußere Ende des Zapfens 120 aufgepreßt.

Nach der Arbeitsstufe 134 wird in der Arbeitsstufe 136 auf der Welle 112 die Montage des Griffteiles 32 auf dem Zapfen 120 erfolgen. Hierzu wird der Zapfen 120 in die Bohrung des Griffteiles 32 eingeführt. Anschließend wird die Feder 138 auf dem Zapfen 120 angeordnet und schließlich die Buchse 142 auf den Zapfen 120 aufgepreßt. Nachdem der Griffteil 32 montiert ist, kann die Säscheibe 28 auf der Nabe 22 montiert werden (Arbeitsstufe 137). Wie aus Fig. 9 hervorgeht, weist die tellerartige Nabe 22 eine Buchse 144 auf, die beiderseits des tellerartigen Mittelstückes der Nabe 22 verläuft. Die Buche 144 weist die mit Gewinde versehene Bohrung 118 auf. An die zentrisch angeordnete Buchse 144 schließen sich zwei sich radial erstreckende Stege 146 und 148 an. Der Griffteil 32 weist ebenfalls diametral gegenüberliegende Flügel 150, 152 auf, die gegen die beiden Stege 146 und 148 zur Anlage kommen. Ist der Griffteil 32 in diese Position gebracht worden, so wird die Säscheibe 28 auf der Nabe 22 montiert und der Griffteil 32 in die längliche Öffnung 30 der Säscheibe 28 eingesetzt, so daß der Distanzring 102 der Säscheibe 29 gegen die tellerförmige Scheibe der Nabe 22 im Bereich eines äußeren Kranzes 153 anliegt. Die Buchse 144 sowie die beiden Stege 146 und 148 sitzen dann in der länglichen Öffnung 30. Ist die Säscheibe 28 entsprechend ausgerichtet, so wird der Griffteil 32 gegenüber der Nabe 22 gedreht, so daß die gegenüberliegenden Flügel 150 und 152 des Griffteiles 32 gegen gegenüberliegende Noppen 154 und 156 zur Anlage kommen, die gemäß Fig. 3 auf der ersten Seite 38 der Säscheibe 28 vorgesehen und koaxial zur Drehachse 76 ausgerichtet sind. Dubei drückt die Feder 138 die beiden Flügel 150 und 152 gegen die Noppen 154 und 156. Die beiden Noppen 154 und 156 sind in Fig. 2 und 3 veranschaulicht.

Schließlich können die beiden gegenüberliegenden Flügel 150 und 152 des Griffteiles 32 in Aussparungen in den Noppen 154 und 156 einrasten. Ist die Säscheibe 28 fertig montiert, so verläuft die Drehachse 76 koaxial zur Mittelachse der Nabe 22.

Ist die Säscheibe 28 auf der Nabe 22 gemäß der Arbeitsstufe 137 montiert, so wird folgende Arbeitsstufe 158 gemäß Fig. 8 ausgeführt, die mit der vierten Arbeitsstufe 128 gemäß Fig. 7 korrespondiert. Die Durchführung der Arbeitsstufe 158 erfolgt durch Aufschrauben der Nabe 22 auf die Welle 112, bis die Säscheibe 28 ihre gewünschte Lage und den entsprechenden Abstand von Gehäuse 12 aufweist. Insbesondere werden die Nabe 22 und die Säscheibe 28 auf der Welle 112 so gedreht, daß die Nabe 22 auf dem Gewinde der Welle 112 gedreht wird, bis der Spalt 74 zwischen dem äußeren Peripherieteil 72 der Säscheibe 28 und der Oberfläche 68 der ersten Gehäusehälfte 14 des Gehäuses 12 die gewünschte Größe aufweist. Die gewünschte Größe des Spaltes 74 kann durch entsprechende Distanzelemente bestimmt bzw. verändert werden. Mit einem derartigen Distanzelement, das gegen die äußere Oberfläche 70 des Reinigungsteils mit Dichtungselement 66 anliegt, werden die Nabe 22 und die Säscheibe 28 auf der Welle 112 gedreht, bis die Säscheibe 28 gegen das Distanzelement anliegt, so daß dann das Distanzelement entfernt werden kann, um den Spalt 74 freizugeben.

In der nachfolgenden Arbeitsstufe 160 gemäß Fig. 8 wird die Säscheibe 28 von der Nabe 22 abgenommen. Dies wird dadurch erreicht, daß der Griffteil 32 gedreht wird und die gegenüberliegenden Flügel 150 und 152 von den Noppen 154 und 156 der Säscheibe 28 weg und auf die Stege 146 und 148 der Nabe 22 bewegt werden. Danach kann die Säscheibe 28 einfach von der Nabe 22 abgezogen werden. Das Entfernen der Säscheibe 28 von der Nabe 22 ist durch die Arbeitsstufe 160 gemäß Fig. 8 gekennzeichnet. Die nächste Arbeitsstufe 162 gemäß Fig. 8 entspricht in etwa der letzten Arbeitsstufe 130 gemäß Fig. 7. In diesem Fall wird die Nabe 22 auf der Welle 112 gesichert, indem ein Arretierungselement 164 in die Nabe 22 und die Welle 112 eingesetzt wird. Das Einsetzen des Arretierungselementes 164 dient zur lösbaren Verbindung der Nabe 22 an einer gewünschten Stelle auf der Welle 112.

Das in den Figuren 3, 9 und 12 gezeigte Arretierungselement 164 besteht aus einem gerade verlaufenden Bolzen 166 und einem sich daran anschließenden, abgebogenen, hakenförmigen Teil 168. Der hakenförmige Teil 168 weist ein abgewinkeltes Ende bzw. eine Spange 170 auf. Die Montage des Arretierungselementes 164 auf der Nabe 22 erfolgt durch Einführen des Stiftes 166 durch zwei gegenüberliegende Schlitze 172 in der Buchse 144 der Nabe 22 und durch eine entsprechende Öffnung bzw. Bohrung 174 in der Welle 112. Die Bohrung 174 ist in gestrichelten Linien in Fig. 9 angedeutet. Die Buchse 144 weist view diametral gegenüberliegende Schlitze 172 auf. Die Schlitze 172 haben somit untereinader einen Winkelabstand von 90° und sind koaxial zur Bohrung 118 angeordnet. Die Öffnung 174 erstreckt sich durch die Welle 112, und zwar im Gewinde 116, und verläuft somit rechtwinklig zur Längsachse der Welle 112.

Der gewünschten Ausrichtung der Säscheibe 28 gemäß der Arbeitsstufe 158 und der Abnahme der Säscheibe 28 von der Nabe 22 gemäß der Arbeitsstufe 160 wird die Nabe 22 auf der Welle 112 gedreht, und zwar um einen kleinen Betrag, der notwendig ist, um die gegenüberliegenden Schlitze 172 gegenüber der Öffnung 174 auszurichten und somit das Arretierungselement 164 zu installieren. Nach Einführen des gerade verlaufenden Bolzens 166 des Arretierungselementes 164 in die Öffnung 174 und in die gegenüberliegenden Schlitze 172 greift der gebogene Teil bzw. die Spange 170 in den oberen Teil eines benachbarten Schlitzes 172, so daß hierdurch das Arretierungselement 164 festgeklemmt wird. Durch die Federkraft des hakenförmigen Teils 168 des Arretierungselementes 164 und durch das Einrasten des gebogenen Teils bzw. der Spange 170 in die obere Öffnung des Schlitzes 172 erhält man eine lösbare Verbindung für das Arretierungselement. Nachdem das Arretierungselement 164 eingesetzt ist, kann die Nabe 22 nicht mehr auf der Welle 112 drehen, so daß die Säscheibe 28 ihre gewünschte Stellung beibehält.

Wie aus Fig. 3 hervorgeht, schafft der Distanzring 102 der Säscheibe 28, der gegen den Kranz 153 der Nabe 22 anliegt, einen kleinen Zwischenraum zwischen der Nabe 22 und dem daneben liegenden Teil der Säscheibe 28 im Bereich der länglichen Öffnung 30. Dieser Raum dient zur Aufnahme des Arretierungselementes 164, das aus der Buchse 144 heraussteht.

Die abschließende Arbeitsstufe 176 gemäß Fig. 8 beinhaltet die nochmalige Montage der Säscheibe 28 auf der Nabe 22. Dies wird auf die gleiche Weise erreicht wie in der Arbeitsstufe 137.

Durch die zuvor beschriebenen Arbeitsstufen gemäß dem Diagram bzw. Blockschaltbild in Fig. 8 in Verbindung mit dem Gerät gemäß Fig. 1 bis 6 und 9 bis 12 wird eine genaue Positionierung der Säscheibe 28 innerhalb der Sävorrichtung 10 gewährleistet. Das Gewinde der Welle 112 in Verbindung mit der Gewindebohrung in der Nabe 22 und dem Arretierungselement 164 ermöglicht, die Nabe 22 an beliebigen Stellen entlang der Welle 112 zu plazieren. Die Welle 112 kann daher in dem Lagerring 110 des Lagers 106 eingebaut werden, ohne daß sie genau plaziert werden muß. Das Arretierungselement 164 dient als lösbare Verbindung zur Sicherung der Nabe 22 auf der Welle 112, wenn die Nabe in die gewünschte Position gebracht worden ist. Sollte es wünschenswert bzw. notwendig sein, die Säscheibe 28 innerhalb des Gehäuses 12 neu zu positionieren, bracht lediglich das Arretierungselement 164 gelöst zu werden und dann die Säscheibe 28 von der Nabe 22, so daß dann die Nabe 22 auf der Welle 112 in die gewünschte Position gedreht werden kann, zusammen mit der Säscheibe 28, die hierzu kurzfristig an der Nabe befestigt ist. Nach der erneuten Bewegung der Säscheibe 28 wird das Arretierungselement 164 wieder in die Öffnung 174 und durch die gegenüberliegenden Schlitze 172 eingesetzt und somit die Nabe 22 auf der Welle 112 in der neuen Position fixiert.

Wie aus Fig. 3 hervorgeht, verläuft die Drehachse 76 der Säscheine 28 koaxial zur Mittelachse der Nabe 22, wenn die Säscheibe 28 an der Nabe 22 befestigt ist. Die im wesentlichen kreisförmige Oberfläche 68 des Gehäuses 12 liegt in einer Ebene. Die Drehachse 76 verläuft rechtwinklig zu dieser Ebene. Die Rechtwinkligkeit ergibt einen gleichmäßigen Spalt 74 auf dem gesamten Kreisumfang. Häufig geschieht es, daß die Welle 112 in dem äußeren Lagerring 110 eingebaut wird, so daß die Achse der Welle 112 nicht genau rechtwinklig zu der Ebene der Kreisfläche bzw. Oberfläche 68 des Gehäuses 12 verläuft. Das würde normalerweise zu einem ungleichmäßig breiten Spalt 74 führen. Dies ist sehr unerwünscht, da nicht gewährleistet ist, daß sämtliche Schmutzpartikel aus dem Gehäuse 12 austreten können, und da zum anderen auch an manchen Stellen Saatgut 80 aus dem Gehäuse 12 entweichen kann.

Deshalb wied es als erfindungswesentlich angesehen, die rechtwinklige Ausrichtung der Drehachse 76 der Säscheibe 28 zur Ebene der Oberfläche 68 des Gehäuses 12 aufrechtzuerhalten, wobei eine gewisse Toleranz oder ein Spiel zwischen dem Gewinde der Welle 112 und dem Gewindeteil der Bohrung 118 der Nabe 22 toleriert werden kann. Insbesondere wird der äußere Durchmesser des Gewinde der Welle 112 etwas kleiner gemacht als der innere Durchmesser des Gewindeteils der Bohrung 118 der Nabe 22, so daß sich ein entsprechendes Spiel ergibt, das in der Toleranzbreite leigt. Hierdurch wird gewährleistet, daß die Drehachse 76 der Säscheibe 28 gegenüber der Längsachse der Welle 112 um nur wenige Grade abweicht. Diese geringfügigen Abweichungen der beiden koaxial verlaufenden Achsen lassen sich durch Drehen der Säscheibe 28 mit Bezug auf das Gehäuse 12 während des Arbeitseinsatzes der Sävorrichtung 10 ausgleichen. Dies ist auch sehr wahrscheinlich aufgrund des aerodynamischen Effekts, der durch die Luftströmung in dem Spalt 74 erzeugt wird, der bewirkt, daß der Winkel zwischen der Drehachse 76 und der Oberfläche 68 des Gehäuses 12 sich uständig etwas verändert, wenn die Säscheibe 28 sich dreht, so daß insgesamt eine gleichmäßige Spaltbreite 74 gewährleistet ist.

**Patentansprüche**

1. Sävorrichtung, insbesondere Einzelkornsävorrichtung, mit einer in einem Gehäuse (12) drehbar gelagerten Säscheibe (28), die auf einem im Gehäuse (12) drehbar gelagerten Welle (112) lösbar angeordnet ist, die einenends aus dem Gehäuse (12) herausragt, dadurch gekennzeichnet, daß zumindest auf einem Teil der Welle (112) eine Nabe (22) axial verstellbar angeordnet ist, die zum Anschluß der Säscheibe (28) dient und über Arretierungselement (164) an jeder beliebigen Stelle auf dem Teil der Welle (112), auf dem die Nabe (22) axial verstellbar ist, losbar befestigbar ist.

2. Vorrichtung nach Anspruch 1, dadurch gekennzeichnet, daß die Arretierungselemente (164) zum lösbaren Anschluß der Nabe (22) auf der Welle (112) einen Bolzen (166) aufweisen, der mit der Welle und der Nabe verbindbar ist.

3. Vorrichtung nach Anspruch 1, dadurch gekennzeichnet, daß ein Teil der Welle (112) mit Gewinde (116) versehen ist und die Nabe (22) eine mit Gewinde versehene, auf das Gewinde der Welle aufschraubbare Bohrung (118) aufweist.

4. Vorrichtung nach Anspruch 3, dadurch gekennzeichnet, daß die Arretierungselemente (164) zum lösbaren Anschluß der Nabe (22) auf der Welle (112) so ausgebildet sind, daß sie ein Drehen der mit Gewinde versehen Bohrung (118) auf dem Gewinde (116) der Welle (112) verhindern.

5. Vorrichtung nach Anspruch 4, dadurch gekennzeichnet, daß die Welle (112) mit einer Bohrung (174) und die Nabe (22) mit zahlreichen gegenüberliegenden Öffnungen (172) versehen ist, in die das Arretierungselement (164) bzw. der Bolzen (166) einsetzbar sind.

6. Vorrichtung nach Anspruch 5, dadurch gekennzeichnet, daß der Bolzen (166) ein äußeres in eine der zahlreichen Öffnungen (172) der Nabe (22) einrastbares, gebogenes Ende (170) aufweist, wobei die Öffnung zur Aufnahme des Endes (170) neben den diametral gegenüberliegenden Öffnungen (172) zur Aufnahme des gerade verlaufenden Teils des Bolzens (166) vorgesehen ist.

7. Vorrichtung nach Anspruch 1, dadurch gekennzeichnet, daß die Peripherie bzw. der Außenumfang (36) der Säscheibe (28) einen Abstand zur Peripherie des Gehäuses (12) aufweist, wobei der Abstand durch die Lage der nabe (22) auf der Welle (112) bestimmt wird, auf der die Nabe lösbar angeordnet ist.

8. Vorrichtung nach einem oder mehreren der vorherigen Ansprüche, dadurch gekennzeichnet, daß die Nabe (22) auf einer Drehachse (76) verläuft, die koaxial zur durch die Gewinde aufweisende Bohrung (118) verlaufenden Achse angeordnet ist, und daß die Bohrung (118) derart größer ist als das Gewinde (116) der Welle (112), daß durch die Bewegung der Nabe auf der Welle geringfügige Winkelabweichungen zwischen den beiden Achsen ausgeglichen bzw. eingestellt werden können.

9. Vorrichtung nach einem oder mehreren der vorherigen Ansprüche, dadurch gekennzeichnet, daß die Bohrung (174) in der Welle (112) rechtwinklig zur Drehachse (76) verläuft und die zahlreichen koaxial um die das Gewinde aufweisende Bohrung (118), angeordneten Öffnungen (172) als Langsschlitze ausgebildet sind, wobei der Bolzen (166) des lösbaren Arretierungselementes (164) sich durch die Bohrung und zwei sich gegenüberliegende Längsschlitze der Nabe (22) erstreckt.

10. Vorrichtung nach einem oder mehreren der vorherigen Ansprüche, dadurch gekennzeichnet, daß das Arretierungselement (164) aus dem annähernd gerade bzw. gerade verlaufenden, durch die Bohrung (174) der Welle (112) und durch gegenüberliegende Längsschlitze sich erstreckenden Bolzen (166) besteht, an den sich ein gebogener bzw. hakenförmiger Teil (168) anschließt, der in einen der Längsschlitze der Nabe (22) einrastbar ist, wobei dieser Teil zwischen den gegenüberliegenden den Bolzen (186) aufnehmenden, Langsschlitzen liegt.

11. Vorrichtung nach einem oder mehreren der vorherigen Ansprüche, dadurch gekennzeichnet, daß die Nabe (22) vier einen gleichen Abstand untereinander aufweisende Längsschlitze aufweist.

12. Vorrichtung nach Anspruch 1, dadurch gekennzeichnet, daß die Säscheibe (28) zahlreiche Saatzellen (40) und daran anschließende, sich radial erstreckende Aussparungen (84) aufweist, die durch keilförmige, zur Peripherie hin abnehmende, sich radial erstreckende Stege bzw. Rippen (86) unterteilt sind.

13. Vorrichtung nach Anspruch 1, dadurch gekennzeichnet, daß die Säscheibe (28) zwischen der in verschiedenen Stellungen festsetzbaren Nabe (22) und einem auf der Welle festklemm- bzw. aufpressbaren Griffteil (32) festsetzbar ist.

14. Vorrichtung nach Anspruch 13, dadurch gekennzeichnet, daß der Griffteil (32) mittels einer auf der Welle (112) aufpressbaren Buchse (142) und einer Feder (138) gegen die Nabe (22) drückbar und festsetzbar ist.

15. Verfahren zur Montage der Vorrichtung des Anspruchs 1, gekennzeichnet durch folgende Arbeitsschritte:

1. Einbau der Welle (112) in das Gehäuse (12),

2. Vorläufiges Einstellen der Nabe (22) auf der Welle (112),

3. Befestigung der Säscheibe (28) an der Nabe (22),

4. Einstellen der Nabe (22) auf der Welle (112) in die gewünschte Endstellung,

5. Festsetzen der Nabe (22) auf der Welle (112).

16. Verfahren nach Anspruch 15, gekennzeichnet durch folgende Arbeitsschritte:

1. der Einbau der Welle (112) in das Gehäuse (12) erfolgt durch Einpressen der Welle (112) in einen Lagerring (110) eines Lagers (106) im Gehäuse (12),

2. zum voräufigen Einstellen der Nabe (22) auf der Welle (112) wird die Nabe (22) auf die Welle (112) aufgeschraubt,

3. nach dem Anbau der Säscheibe (28) an die Nabe (22) wird die Nabe (22) auf der Welle (112) durch Weiterdrehen so lange axial verstellt, bis die Säscheibe (28) einen gewünschten Abstand zu dem Gehäuse (12) aufweist,

4. zum Sichern der Nabe (22) auf der Welle (112) wird die Säscheibe (28) wieder abgebaut, das Arretierungselement (164) in Nabe (22) und Welle (112) eingesetzt und die Säscheibe (28) wieder an die Nabe (22) angebaut.

17. Verfahren nach Anspruch 15 oder 16, dadurch gekennzeichnet, daß nach dem vorläufigen Einstellen der Nabe (22) auf der Welle (112) ein Griffteil (32) auf einen Zapfen (120) an der Welle (112) und nachfolgend eine Feder (138) auf den Zapfen (120) aufgeschoben werden, wonach auf den Zapfen (120) eine Buchse (142) aufgesetzt wird.

## Revendications

1. Semoir, en particulier semoir monograine comportant un distributeur (28) monté de façon à pouvoir tourner dans un carter (12) qui est disposé de façon amovible sur un arbre (112) monté de façon à pouvoir tourner dans le carter (12) et qui sort du carter (12) par une extrémité, caractérisé en ce qu'un moyeu (22) est disposé de façon à pouvoir se déplacer axialement au moins sur une partie de l'arbre (112), et sert au raccordement du distributeur (20) et peut être fixé de façon amovible, au moyen d'éléments de blocage (164), en n'importe quel point de la partie de l'arbre (112) sur laquelle le moyeu (22) peut se déplacer axialement.

2. Dispositif selon la revendication 1, caractérisé en ce que les éléments de blocage (164) pour le raccordement amovible du moyeu (22) sur l'arbre (112) comportent une cheville (166) qui peut être reliée à l'arbre et au moyeu.

3. Dispositif selon la revendication 1, caractérisé en ce qu'une partie de l'arbre (112) comporte un filetage (116), et en ce que le moyeu (22) comporte un alésage (118) taraudé, pouvant être vissé sur le filetage de l'arbre.

4. Dispositif selon la revendication 3, caractérisé en ce que les éléments de blocage (164) de raccordement amovible du moyeu (22) sur l'arbre (112) sont conformés de telle façon qu'ils empêchent une rotation de l'alésage taraudé (118) sur le filetage (116) de l'arbre (112).

5. Dispositif selon la revendication 4, caractérisé en ce que l'arbre (112) comporte un alésage (174) et le moyeu (22) de nombreuses ouvertures opposées (172) dans lesquelles l'élément de blocage (164) et respectivement la cheville (166) peuvent être introduits.

6. Dispositif selon la revendication 5, caractérisé en ce que la cheville (166) comporte une extrémité extérieure repliée (170) pouvant s'engager dans l'une des nombreuses ouvertures (172) du moyeu (22), l'ouverture devant recevoir l'extrémité (170) étant prévue près des ouvertures (172) diamétralement opposées devant recevoir la partie rectiligne de la cheville (166).

7. Dispositif selon la revendication 1, caractérisé en ce que la périphérie ou le pourtour extérieur (36) du distributeur (28) est à une certaine distance à la périphérie du carter (12), cette distance étant déterminée par la position du moyeu (22) sur l'arbre (112) sur lequel le moyeu est placé de façon amovible.

8. Dispositif selon une ou plusieurs des revendications précédentes, caractérisé en ce que le moyeu (22) se trouve sur un axe de rotation (76) disposé coaxialement à l'axe s'étendant dans l'alésage taraudé (118), et en ce que l'alésage (118) est plus grand que le filetage (116) de l'arbre (112) de telle façon que, par le mouvement du moyeu sur l'arbre, de-légers écarts angulaires entre les deux axes peuvent être compensés ou ajustés.

9. Dispositif selon un ou plusieurs des revendications précédentes, caractérisé en ce que l'alésage (174) de l'arbre (112) est dirigé orthogonalement à l'axe de rotation (76), et en ce que les nombreuses ouvertures (172) disposées coaxialement autour de l'alésage (118) taraudé sont réalisées sous la forme de fentes longitudinales, la cheville (166) de l'élément de blocage amovible (164) s'étendant à travers l'alésage et deux fentes longitudinales opposées du moyeu (22).

10. Dispositif selon une ou plusieurs des revendications précédentes, caractérisé en ce que l'élément de blocage (164) est constituée par la cheville (166) dirigée approximativement en ligne droite ou rectiligne, s'étendant à travers l'alésage (174) de l'arbre (112) et à travers des fentes longitudinales opposées, à laquelle se raccorde une partie repliée ou en crochet (168) qui peut s'engager dans l'une des fentes longitudinales du moyeu (22), cette partie se trouvant entre les fentes longitudinales opposées recevant la cheville (166).

11. Dispositif selon une ou plusieurs des revendications précédentes, caractérisé en ce que le moyeu (22) comporte quatre fentes longitudinales présentant une même distance entre elles.

12. Dispositif selon la revendication 1, caractérisé en ce que le distributeur (28) comporte de nombreuses alvéoles à grains (40) et des évidements (84) dirigés radialement qui s'y raccordent, lesquels sont subdivisés par des épaisseurs de matière ou nervures cunéiformes (86) dirigées radialement, décroissants vers la périphérie.

13. Dispositif selon la revendication 1, caractérisé en ce que le distributeur (28) peut être bloqué entre le moyeu (22) pouvant être bloqué en diverses positions et une section de prise (32) pouvant être bloquée ou engagée par pression sur l'arbre.

14. Dispositif selon la revendication 13, caractérisé en ce que la section de prise (32) peut être appuyée et bloquée contre le moyeu (22) au moyen d'une douille (142) pouvant être engagée par pression sur l'arbre (112) et d'un ressort (138).

15. Procédé de montage du dispositif selon la revendication 1, caractérisé par les stades opératoires suivants:

1. introduction de l'arbre (112) dans le carter (12),

2. positionnement préalable du moyeu (22) sur l'arbre (112),

3. fixation du distributeur (28) sur le moyeu (22),

4. positionnement du moyeu (220 sur l'arbre (112) dans la position finale souhaitée,

5. blocage du moyeu (22) sur l'arbre (112).

16. Procédé selon la revendication 15, caractérisé par les stades opératoires suivantes:

1. l'introduction de l'arbre (112) dans le carter (12) est effectuée en enfonçant l'arbre (112) dans une bague de roulement (110) d'un palier (106) situé dans le carter (12),

2. pour positionner préalablement le moyeu (22) sur l'arbre (112), on visse le moyeu (22) sur l'arbre (112),

3. après le montage du distributeur (28) sur le moyeu (22), on déplace axialement le moyeu (22) sur l'arbre (112) en poursuivant la rotation jusqu'à ce que le distributeur (28) soit à une distance souhaitée du carter (12),

4. pour immobiliser le moyeu (22) sur l'arbre (112), on redémonte le distributeur (28), on introduit l'élément de blocage (164) dans le moyeu (22) et l'arbre (112) et l'on replace le distributeur (28) sur le moyeu (22).

17. Procédé selon la revendication 15 ou 16, caractérisé en ce qu'après le positionnement préalable du moyeu (22) sur l'arbre (112), on fait passer une section de prise (32) sur un tenon (120) situé sur l'arbre (112), puis un ressort (138) sur le tenon (120), après quoi on place une douille (142) sur le tenon (120).

**Claims**

1. A seed drill, in particular a single-grain seed drill, comprising a seed disc (28) which is rotatably mounted in a housing (12) and which is releasably arranged on a shaft (112), the shaft being rotatably mounted in the housing (12) and projecting at one end out of the housing (12), characterised in that a hub (22) is axially displaceably arranged at least on a part of the shaft (112) and serves for connection of the seed disc (28) and can be releasably fixed by way of arresting elements (164) at any desired position on the part of the shaft (112) on which the hub (22) is axially displaceable.

2. A seed drill according to claim 1 characterised in that the arresting elements (164) for releasably connecting the hub (22) on the shaft (112) has a pin (166) which can be connected to the shaft and the hub.

3. A seed drill according to claim 1 characterised in that a part of the shaft (112) is provided with a screwthread (116) and the hub (22) has a bore (118) which is provided with a screwthread and which can be screwed on to the screwthread of the shaft.

4. A seed drill according to claim 3 characterised in that the arresting elements (164) for releasably connecting the hub (22) on the shaft (112) are such that they prevent rotary movement of the screwthreaded bore (118) on the screwthread (116) on the shaft (112).

5. A seed drill according to claim 4 characterised in that the shaft (112) is provided with a bore (174) and the hub (22) is provided with numerous oppositely disposed openings (172) into which the arresting element (164) and the pin (166) respectively can be fitted.

6. A seed drill according to claim 5 characterised in that the pin (166) has an outer bent end (170) which can be engaged into one of the numerous openings (172) in the hub (22), wherein the opening for receiving the end (170) is provided beside the diametrally oppositely disposed openings (172) for receiving the straight part of the pin (166).

7. A seed drill according to claim 1 characterised in that the periphery or the outer circumference (36) of the seed disc (28) is at a spacing relative to the periphery of the housing (12), wherein the spacing is determined by the position of the hub (22) on the shaft (112) on which the hub is releasably arranged.

8. A seed drill according to one or more of the preceding claims characterised in that the hub (22) extends on an axis of rotation (76) which is arranged coaxially with respect to the axis which passes through the screwthreaded bore (118), and that the bore (118) is larger than the screwthread (116) on the shaft (112) in such a way that minor angular differences between the two axes can be adjusted or compensated by movement of the hub on the shaft.

9. A seed drill according to one or more of the preceding claims characterised in that the bore (174) in the shaft (112) extends normal to the axis of rotation (76) and the numerous openings (172) which are arranged coaxially around the screwthreaded bore (118) are in the form of slots, wherein the pin (166) of the releasable arresting element (164) extends through the bore and two mutually oppositely disposed slots in the hub (22).

10. A seed drill according to one or more of the preceding claims characterised in that the arresting element (164) comprises the straight or approximately straight pin (166) which extends through the bore (174) in the shaft (112) and the oppositely disposed slots and which is adjoined by a bent or hook-shaped portion (168) which can be engaged into one of the slots, wherein said portion is disposed between the oppositely disposed slots which accommodate the pin (166).

11. A seed drill according to one or more of the preceding claims characterised in that the hub (22) has four slots which are at equal spacings from each other.

12. A seed drill according to claim 1 characterised in that the seed disc (28) has numerous seed cells (40) and adjoining same radially extending recesses (84) which are divided by wedge-shaped radially extending ribs or limbs (86) which reduce towards the periphery.

13. A seed drill according to claim 1 characterised in that the seed disc (28) can be fixed between the hub (22) which can be fixed in different positions, and a gripping portion (32) which can be pressed or clamped fast on the shaft.

14. A seed drill according to claim 13 characterised in that the gripping portion can be pressed against the hub (22) and fixed by means of a bush (142) which can be pressed on the shaft (112), and a spring (138).

15. A method of assembling the seed drill of claim 1 characterised by the following working steps:

1. fitting the shaft (112) into the housing (12),

2. provisionally setting the hub (22) on the shaft (112),

3. fixing the seed disc (28) to the hub (22),

4. setting the hub (22) on the shaft (112) into the desired final position, and

5. fixing the hub (22) on the shaft (112).

16. A method according to claim 15 characterised by the following working steps:

1. fitting of the shaft (112) into the housing (12) is effected by pressing the shaft (112) into a bearing race (110) of a bearing (106) in the housing (12),

2. for provisionally setting the hub (22) on the shaft (112) the hub (22) is screwed on to the shaft (112),

3. after attachment of the seed disc (28) to the hub (22) the hub (22) is axially displaced on the shaft (112) by further rotating same until the seed disc (28) is at a desired spacing relative to the housing (12), and

4. for securing the hub (22) on the shaft (112) the seed disc (28) is removed again, the arresting element (164) is fitted in the hub (22) and the shaft (112) and the seed disc (28) is attached to the hub (22) again.

17. A method according to claim 15 or claim 16 characterised in that after the operation of provisionally setting the hub (22) on the shaft (112) a gripping portion (32) is pushed on to a trunnion portion (120) on the shaft (112) and then a spring (138) is pushed on to the trunnion portion (120) whereupon a bush (142) is fitted on to the trunnion portion (120).

Fig. I

Fig. 4

Fig. 2

Fig. 3

EP 0 193 833 B1

*Fig. 5*

*Fig. 6*

EINBAU DER
WELLE IM GEHÄUSE — 122

↓

VORLÄUFIGES EIN-
STELLEN DER NABE — 124
AUF DER WELLE

↓

BEFESTIGUNG DER
SÄSCHEIBE AN — 126
DER NABE

↓

EINSTELLEN DER
NABE AUF DER
WELLE IN DIE — 128
GEWÜNSCHTE
ENDSTELLUNG

↓

NABE AUF DER
WELLE SICHERN — 130

**FIG.7**

EINPRESSEN DER
WELLE IN DEN LAGER-
RING IM GEHÄUSE

132 —

↓

AUFSCHRAUBEN DER
134 — NABE AUF DIE WELLE

↓

AUFSCHIEBEN DES
GRIFFTEILS UND DER
FEDER AUF DEN ZAPFEN
MIT NACHFOLGENDEM
136 — AUFPRESSEN DER BUCHSE

↓

137 — ANBAU DER SÄSCHEIBE
AN NABE

↓

WEITERSCHRAUBEN DER
NABE AUF DER WELLE,
BIS DIE SÄSCHEIBE DEN
158 — GEWÜNSCHTEN ABSTAND
ZU DEM GEHÄUSE AUFWEIST

↓

160 — ABBAU DER SÄSCHEIBE

↓

EINSETZEN DES ARRE-
TIERUNGSELEMENTES
162 — IN NABE UND WELLE

↓

176 — WIEDERANBAU DER SÄ-
SCHEIBE AN DER NABE

**FIG.8**

5

Fig. 9

Fig. 10

Fig. 11

Fig. 12